Europäisches Patentamt

European Patent Office

Office européen des brevets

(19)

(11) Veröffentlichungsnummer : **0 048 686**
**B1**

(12) **EUROPÄISCHE PATENTSCHRIFT**

(45) Veröffentlichungstag der Patentschrift :
11.12.85

(21) Anmeldenummer : 81730093.2

(22) Anmeldetag : 17.09.81

(51) Int. Cl.⁴ : **B 60 C 27/06,** B 60 C 27/10

(54) Gleitschutzkette für Fahrzeugreifen.

(30) Priorität : 18.09.80 CH 7023/80

(43) Veröffentlichungstag der Anmeldung :
31.03.82 Patentblatt 82/13

(45) Bekanntmachung des Hinweises auf die Patenterteilung : 11.12.85 Patentblatt 85/50

(84) Benannte Vertragsstaaten :
AT DE FR GB IT

(56) Entgegenhaltungen :
DE-A- 2 608 825
US-A- 2 192 227

(73) Patentinhaber : RUD-Kettenfabrik Rieger & Dietz
GmbH u. Co.
Friedensinsel
D-7080 Aalen 1 (DE)

(72) Erfinder : Rieger, Hansjörg
Saarstrasse 48
D-7080 Aalen (DE)

(74) Vertreter : Böning, Manfred, Dr. Ing. et al
Patentanwälte Dipl.-Ing. Dieter Jander Dr. Ing. Manfred Böning Kurfürstendamm 66
D-1000 Berlin 15 (DE)

**Beschreibung**

Die Erfindung betrifft eine Gleitschutzkette für Fahrzeugreifen mit je einer bei montierter Kette gegen die Innenseite und die Außenseite des Reifens zur Anlage kommenden Halterung für sich über die Lauffläche erstreckende Kettenstrangabschnitte, bei der zum Spannen der von einem über den Reifen stülpbaren elastischen Bügel gebildeten inneren Halterung eine an einem Ende des Bügels befestigte, durch ein Führungselement an seinem anderen Ende und anschliessend über die Lauffläche des Reifens zu einem Führungselement an der äußeren Halterung geführte Spannkette dient.

Bekannt ist eine Gleitschutzkette der vorstehenden Art, bei der das am Bügel angeordnete Führungselement von einer Öse gebildet wird (DE-OS 25 56 115). Die Abmessungen der Öse entsprechen dabei im wesentlichen den Abmessungen eines an einer inneren Seitenkette befestigten Führungsringes einer anderen ebenfalls bekannten Gleitschutzkette (US-PS 2 537 392). Beide bekannten Konstruktionen sollen die Montage der Kette dahingehend vereinfachen, daß der Benutzer der Kette die innere Halterung der Kette von der Vorderseite des Reifens her spannen kann. Wie sich gezeigt hat, treten beim praktischen Einsatz von Gleitschutzketten der in Betracht gezogenen Art insbesondere dann Probleme auf, wenn während der Montage der Gleitschutzkette eine Drehbewegung des Rades erforderlich ist. Um eine solche Drehbewegung kommt man dann nicht herum, wenn die Spannkette an einer Stelle des Reifens nach vorn gezogen werden muß, die beim losen Auflegen der Kette im Bereich der Bodenaufstandsfläche des Reifens liegt. Letzteres ist bei Verwendung eines Bügels als innere Halterung regelmässig der Fall. Durch die Drehbewegung wird der die Enden des Bügels miteinander verbindende, Überlänge aufweisende Teil der Spannkette aus einer horizontalen Lage, in der er regelmässig voll auf dem Boden aufliegt, in eine senkrechte Lage überführt. Hierbei kann der die Bügelenden überbrückende Teil der Spannkette während der Anfahrbewegung unter einen Abschnitt des locker über den Reifen nach vorn geführten Teils der Spannkette rutschen und eine deren Anziehen verhindernde Sperre bilden, die das Spannen der Gleitschutzkette vielfach unmöglich macht. Der Benutzer muß den Montagevorgang wohl oder übel wiederholen, wobei er allerdings keine Gewähr dafür hat, daß beim nächsten Versuch keine erneute Überlappung von Teilen der Spannkette stattfindet.

Der Erfindung liegt die Aufgabe zugrunde, eine Gleitschutzkette der eingangs genannten Art zu schaffen, bei der die Gefahr des Zustandekommens unerwünschter zu Montagestörungen führender Überlappungen von Teilen der Spannkette auf ein Minimum reduziert wird. Diese Aufgabe wird erfindungsgemäß dadurch gelöst, daß das am Bügel angeordnete Führungselement die Spannkette auf einer Länge abstützt, die mindestens gleich der doppelten Teilung t der Glieder der Spannkette ist.

Die erfindungsgemässe Gleitschutzkette bietet den Vorteil, daß das Führungselement einen Abstandshalter für den die Bügelenden miteinander verbindenden Teil der Spannkette und deren sich hieran anschliessenden Teil bildet. Wie sich gezeigt hat, wird durch die vorgeschlagene überraschend einfache Maßnahme die Montage von Gleitschutzketten der in Betracht gezogenen Art erheblich sicherer und unproblematischer. Das Führungselement erweist sich dabei als Ösen oder Ringen klar überlegen ; dies deshalb, weil die umlenkung der Spannkette über eine vergleichsweise lange Stützstrecke erfolgt.

Als besonders vorteilhaft erweist es sich, wenn das Führungselement von einem Rohrbogen gebildet wird, der einen eine Verlängerung des Bügels formenden ersten Schenkel und einen in Richtung des Laufnetzes nach außen verlaufenden zweiten Schenkel aufweist.

Der nach außen verlaufende zweite Schenkel des Rohrbogens ist regelmässig länger als der erste Schenkel, und zwar sollte seine Länge L mindestens gleich der zweifachen Teilung t der Glieder der Spannkette sein.

Die Gefahr von Überlappungen zwischen Teilen der Spannkette und/oder Teilen der Spannkette und des Laufnetzes läßt sich noch dadurch weiter verringern, daß am dem Rohrbogen gegenüberliegenden Ende des Bügels eine Versteifungshülse für einen Teil des den Abstand zwischen den Enden des Bügels überbrückenden Teil der Spannkette angeordnet ist. Durch die Versteifungshülse, die vorzugsweise leicht in Richtung auf die Mitte des Bügels abgewinkelt ist, wird die Einhaltung des angestrebten Abstandes zwischen zum Überlappen neigender Kettenstrangabschnitten noch verstärkt.

Vorteilhaft ist es darüberhinaus, wenn die Spannkette im Bereich des Laufnetzes eine am Ende eines Spurstückes befestigte Gleithülse passiert, deren Länge $L_G$ größer ist als die Differenz aus der Teilung t der Glieder der Spannkette und dem Glieddrahtdurchmesser d dieser Glieder.

Die Erfindung wird im folgenden anhand der beigefügten Zeichnung näher erläutert. Es zeigen :

Figur 1 die Rückseite einer Gleitschutzkette während des Spannens der inneren Halterung,

Figur 2 eine Einzelheit der Gleitschutzkette gemäß Figur 1 vor dem Spannen,

Figur 3 die Einzelheit gemäß Figur 2 nach dem Spannen,

Figur 4 stark schematisiert eine Abwicklung einer Gleitschutzkette im Bereich der Spannstelle,

Figur 5 eine modifizierte Ausführungsform der Gleitschutzkette gemäß Figur 4, bei der die Spannkette nicht Teil eines homogenen Laufnetzes bildet,

Figur 6 die Seitenansicht einer Gleithülse für eine Gleitschutzkette gemäß Figur 4,

Figur 7 einen Schnitt längs der Linie VII-VII in Figur 6,

Figur 8 einen Schnitt durch eine Gleithülse abgewandelter Bauart,

Figur 9 einen Schnitt durch eine weitere Gleithülse,

Figur 10 einen Teil einer Gleithülse mit einem kreuzförmigen Führungskanal,

Figur 11 ein Führungselement abgewandelter Art,

Figur 12 ein weiteres modifiziertes Führungselement und

Figur 13 die perspektivische Ansicht einer weiteren Gleitschutzkette.

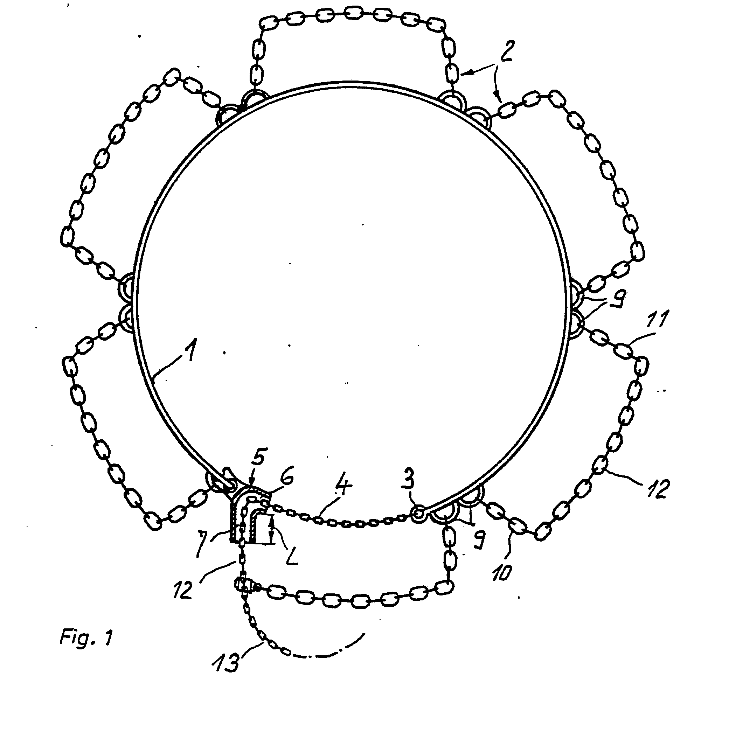

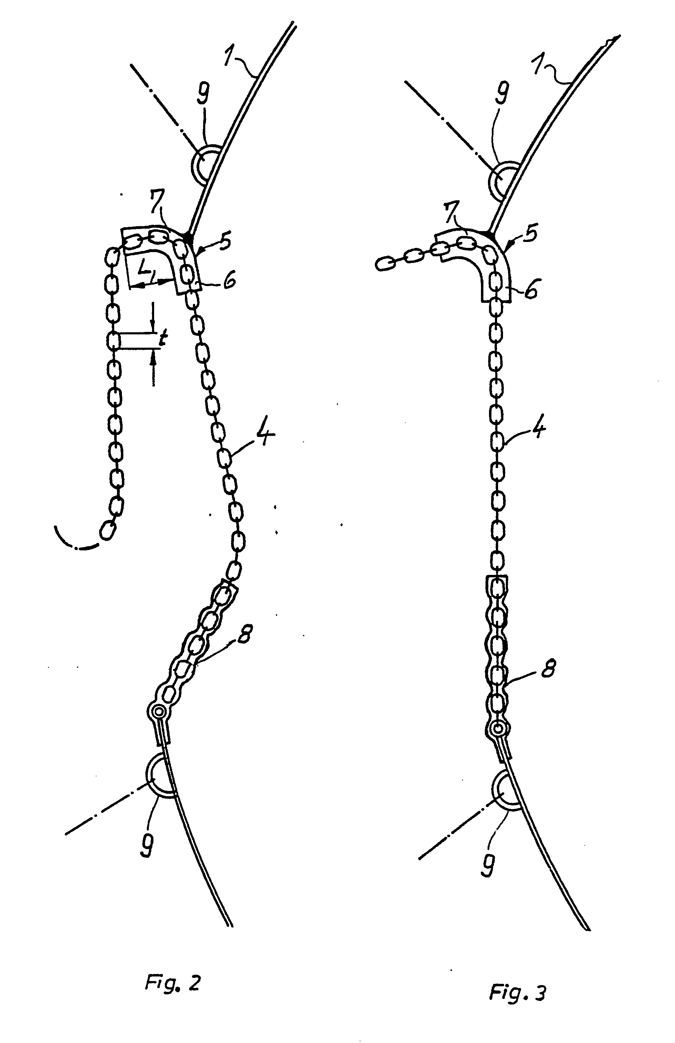

Bei der in den Figuren 1 bis 3 dargestellten Gleitschutzkette ist 1 ein von oben über einen Reifen stülpbarer, eine innere Halterung für ein Kettennetz 2 bildender elastischer Bügel, an dessen einem Ende eine Öse 3 zur Befestigung des Endgliedes einer Spannkette 4 angeordnet ist. Die Spannkette 4 verläuft von der Öse 3 zu einem aus einem Rohrbogen 5 bestehenden Führungselement am anderen Ende des Bügels. Der Rohrbogen 5 besitzt einen ersten eine Verlängerung des Bügels 1 formenden Schenkel 6 und einen in Richtung des Laufnetzes nach außen verlaufenden Schenkel 7, welcher länger ist als der Schenkel 6. Die Länge L des zweiten Schenkels 7 des Rohrbogens sollte mindestens gleich der zweifachen Teilung t der Glieder der Spannkette 4 sein (vgl. Figur 2). Gegenüber einem üblichen von einem Rundglied gebildeten Umlenkring bietet allerdings bereits ein Führungselement Vorteile, dessen Länge größer ist als die Differenz aus der Teilung t der Glieder der Spannkette und dem Glieddrahtdurchmesser d dieser Glieder. Die überlegenheit des Führungselementes resultiert in diesem Falle aus der gegenüber einem Rohrbogen zwar verminderten, aber gleichwohl noch vorhandenen Abstandshaltung und aus der Verbesserung der Führung der Spannkette im Umlenkbereich.

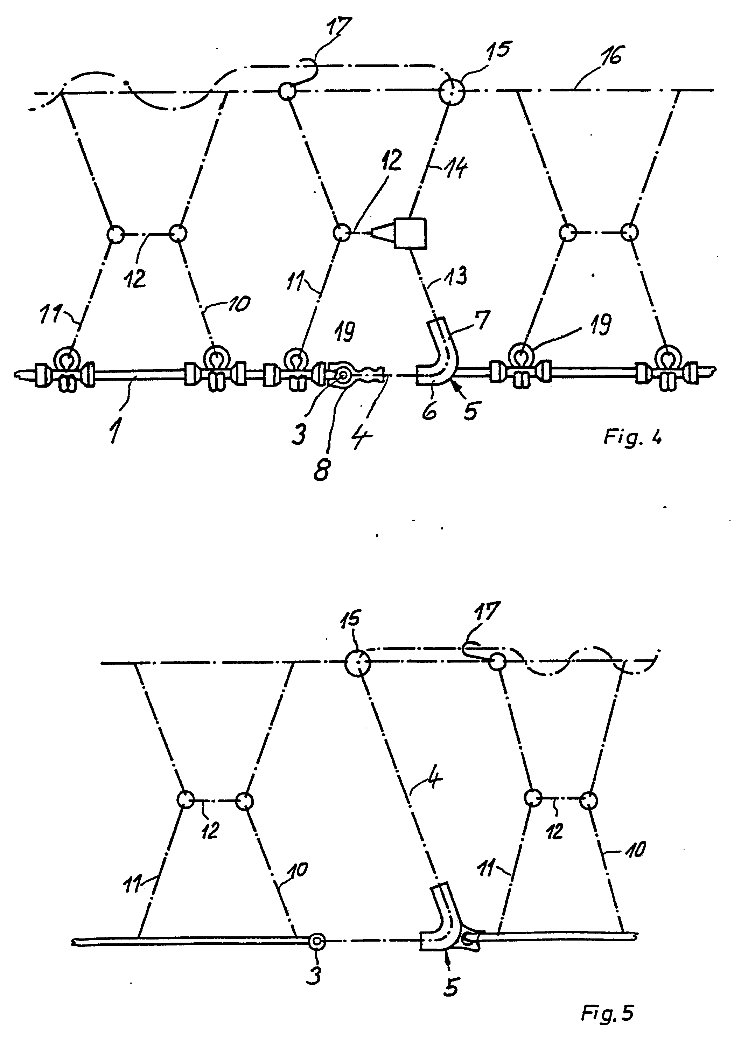

Am dem Rohrbogen 5 gegenüberliegenden Ende des Bügels 1 kann, wie dies in den Figuren 2 und 3 gezeigt ist, eine elastische Verteifungshülse 8 für einen Teil des den Abstand zwischen den Enden des Bügels überbrückenden Teils der Spannkette 4 angeordnet werden. Die Versteifungshülse 8 ist, wie man aus Figur 2 entnehmen kann, bei lockerer Spannkette leicht in Richtung zur Mitte des Bügels 1 abgewinkelt. Aufgrund ihrer Elastizität wird sie bei Ausübung einer Zugkraft auf die Spannkette aus der in Figur 2 dargestellten Lage in die in Figur 3 dargestellte Lage überführt. Auch die Versteifungshülse 8 vergrößert folglich den Abstand zwischen den nebeneinanderliegenden Abschnitten der Spannkette 4 in Figur 2.

Der Bügel 1 ist mit Anschlußösen 9 für quer zur Laufrichtung verlaufende Kettenstrangstücke 10 und 11 versehen, die im Laufnetzbereich mit anderen Kettenstrangstücken in Verbindung stehen, welche Spurstücke 12 bilden. Bei dem Ausführungsbeispiel gemäß Figur 4, das der Gleitschutzkette gemäß Figuren 1-3 weitgehend entspricht, wird ein Teil der Spannkette 4 von in ein homogenes Laufnetz einbezogenen Kettenstrangstücken 13 und 14 gebildet. In diesem Fall ist der Abstand zwischen den Enden des Bügels 1 im wesentlichen gleich der Länge der Basis eines Trapezes, dessen übrige Seiten von einem Spurstück 12 und zwei quer zur Laufrichtung verlaufenden Kettenstrangstücken 11 und 13 gebildet werden.

Das freie Ende der Spannkette 4 wird durch einen Ring 15 einer an der Reifenaußenseite angeordneten äußeren Seitenkette 16 gezogen und in einen Haken 17 eingehängt, wobei überschüssige Länge um die äußere Seitenkette geschlagen wird. Im Bereich der Lauffläche des Reifens passiert die Spannkette eine Gleithülse 18, die sie führt. Anstelle der fest mit dem Bügel 1 verbundenen Anschlußösen 9 werden bei dem Ausführungsbeispiel gemäß Figur 4 von Seitenhaken gebildete, drehbar auf dem Bügel 1 gelagerte Anschlußösen 19 verwendet.

Das Ausführungsbeispiel gemäß Figur 5 entspricht im Grundaufbau dem zuvor beschriebenen Ausführungsbeispiel. In diesem Fall bildet die Spannkette 4 jedoch nicht einen Bestandteil eines homogenen Kettennetzes und der Rohrbogen 5 ist um begrenzte Beträge bewegbar am Ende des Bügels 1 gelagert.

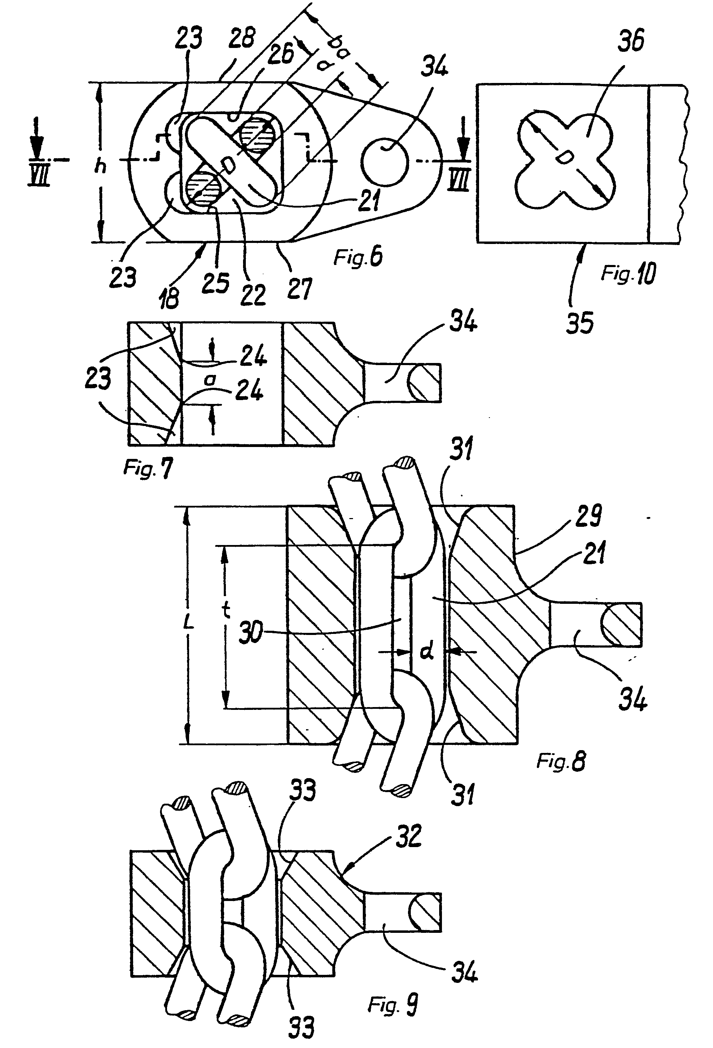

Die Figuren 6 und 7 zeigen Einzelheiten der in Figur 4 dargestellten Gleithülse 18. Wie man sieht, besitzt die Gleithülse 18 einen im wesentlichen quadratischen Führungskanal 20, dessen Diagonalen D nur wenig größer sind als die äußere Breite $b_a$ der Glieder 21 der Spannkette 4. Die Gleithülse 18 ist an den Einlaufecken ihres Führungskanals 22 mit schrägen Führungsrillen 23 versehen. Der Abstand a der inneren Endpunkte 24 der Führungsrillen 23 ist mindestens gleich der Differenz aus der Teilung t der Glieder 21 der Spannkette 4 und dem doppelten Glieddrahtdurchmesser d dieser Glieder 21. Die Führungsrillen 23 gewährleisten einen ruckfreien Einlauf der Spannkette 4 in die Gleithülse 18.

Der Führungskanal 22 besitzt zwei im wesentlichen parallel zur Reifenlauffläche verlaufende Innenwände 25, 26 und zwei im wesentlichen ebenfalls parallel zur Reifenlauffläche verlaufende Außenwände 27 und 28. Der Abstand h der parallel zur Reifenlauffläche verlaufenden Außenwände 27 und 28 des Führungskanals 22 ist dabei höchstens gleich der Summe aus der äußeren Breite $b_a$ der Glieder 21 der Spannkette und dem doppelten Glieddrahtdurchmesser d dieser Glieder 21.

Aufgrund der beschriebenen Ausbildung des Führungskanals 22 ist sichergestellt, daß die Glieder 21 der Spankette 4 auch im Bereich der Gleithülse 18 unter einem Winkel von etwa 45° zur Reifenlauffläche liegen, d. h. unter dem gleichen Winkel, den sie auch außerhalb der Gleithülse 18 zur Reifenlauffläche einnehmen.

Figur 8 zeigt eine Gleithülse 29 mit einem Führungskanal 30, der über abgerundete Ecken 31 verfügt. Die Länge $L_G$ dieses Führungskanals ist besonders groß, und zwar gleich der Teilung t des Gliedes 21 vermehrt um dessen doppelten Glieddrahtdurchmesser d.

Figur 9 zeigt eine Gleithülse 32 mit abgeschrägten Ecken 33. Sämtliche beschriebenen Gleithülsen 18, 29 und 32 sind mit jeweils einer Öse 34 versehen, in die das Endglied eines Spurstückes 3 eingehängt werden kann.

Figur 10 zeigt schließlich die Seitenansicht einer Gleithülse 35 mit einem im wesentlichen kreuzförmigen Führungskanal 36, dessen Achsen unter einem Winkel von etwa 45° zur Lauffläche angeordnet sind.

Es versteht sich, daß auch das Führungselement nach Art einer Gleithülse ausgebildet werden kann.

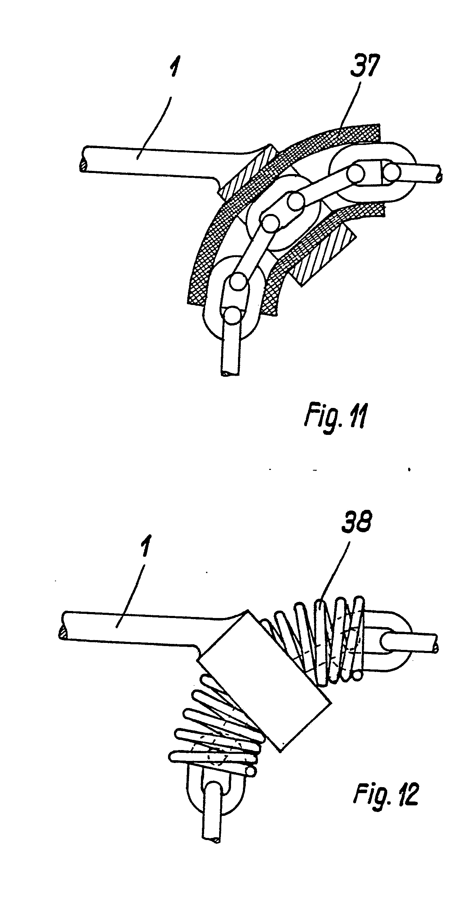

In Figur 11 ist ein Führungselement dargestellt, dessen Wandung 37 aus elastischem Material besteht, während Figur 12 ein Führungselement zeigt, dessen Wandung von einer Schraubenfeder 38 gebildet wird. Anstelle einer Schraubenfeder 38 könnte man auch stapelartig nebeneinander angeordnete geschlossene Durchziehglieder verwenden.

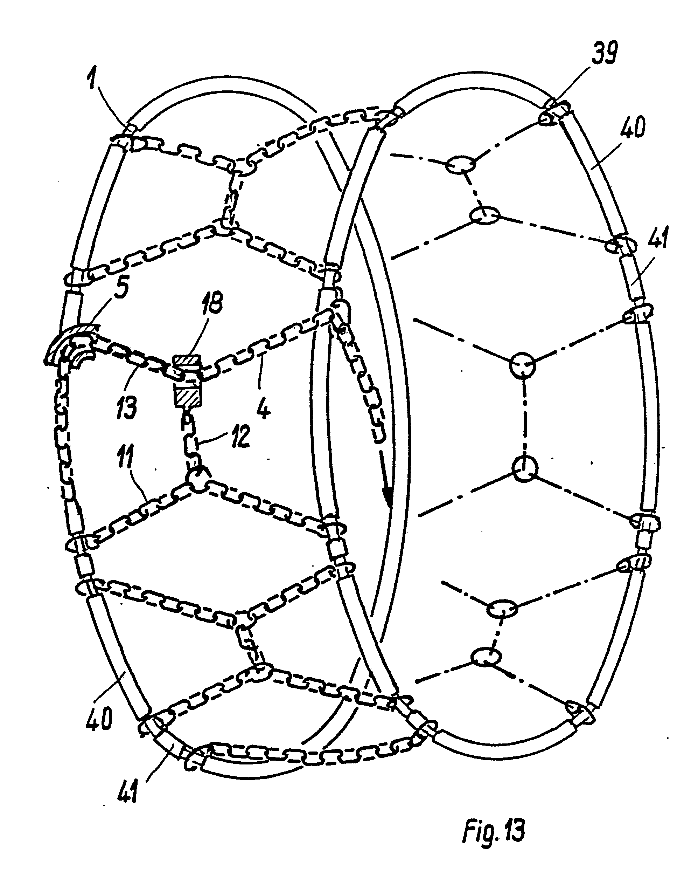

Bei der in Figur 13 dargestellten Gleitschutzkette ist nicht nur die aus einem Bügel 1 bestehende innere Halterung formsteif ausgebildet, sondern es findet auch eine formsteife ringförmige äußere Halterung 39 Verwendung, wobei die Formsteifigkeit der äußeren Halterung 39 vorzugsweise geringer ist als die Formsteifigkeit der inneren Halterung. 40 und 41 sind von Kunststoffschlauchabschnitten gebildete Abstandshalter.

Die beschriebenen Gleitschutzketten sind durch die Verwendung einer formsteifen inneren Halterung vorgeordnet, d. h. Entwirrungsarbeiten entfallen. Der Benutzer kann ohne weiteres erkennen, wie er die Gleitschutzkette anzufassen hat. Es bereitet ihm keine Schwierigkeiten, die Ketten von der Außenseite des Reifens von oben über den Reifen zu stülpen. Aufgrund der Formsteifigkeit des Bügels kann dieser in der Nähe der Bügelenden erfaßt und deshalb auch ohne Schwierigkeiten in Radkästen eingeführt werden, deren Innenwand einen geringen Abstand vom Reifen hat. Das Laufnetz kann homogen ausgebildet sein. Bei Verwendung einer endlosen, vorzugsweise ebenfalls formsteifen äußeren Halterung, d. h. einer Halterung, die einen geschlossenen Ring bildet, kann die Halterung vergleichsweise hoch liegen, weil die Anpassung der Gleitschutzkette an den Reifen allein über die innere Halterung erfolgt. Die Gefahr einer Beschädigung von Leichtmetallfelgen oder Radzierringen ist somit eliminiert. Durch die Verwendung einer durch eine am Ende eines Spurstückes angeordnete Gleithülse geführten Spannkette erfolgt beim Spannen der Gleitschutzkette eine Selbstausrichtung des Kettennetzes, dessen Homogenität die Lauf- und Spurführungseigenschaften der Gleitschutzkette positiv beeinflußt. Gefördert wird diese Ausrichtung durch die scherenförmig von der Gleithülse abgehenden Abschnitte der Spannkette. Der Abstand der Anschlußpunkte benachbarter Spurstücke an der äußeren und inneren Halterung ist gleich groß. Dadurch, daß die Kette von außen montier- und spannbar ist, entfällt die Norwendigkeit, hinter den Reifen zu greifen.

## Patentansprüche

1. Gleitschutzkette für Fahrzeugreifen mit je einer bei montierter Kette gegen die Innenseite und die Außenseite des Reifens zur Anlage kommenden Halterung für sich über die Lauffläche erstreckende Kettenstrangabschnitte (10, 11), bei der zum Spannen der von einem über den Reifen stülpbaren elastischen Bügel (1) gebildeten inneren Halterung eine an einem Ende des Bügels befestigte, durch ein Führungselement an seinem anderen Ende und anschliessend über die Lauffläche des Reifens zu einem Führungselement (15) an der äußeren Halterung geführte Spannkette (4) dient, dadurch gekennzeichnet, daß das am Bügel (1) angeordnete Führungselement die Spannkette (4) auf einer Länge abstützt, die mindestens gleich der doppelten Teilung (t) der Glieder der Spannkette (4) ist.

2. Gleitschutzkette nach Anspruch 1, dadurch gekennzeichnet, daß das Führungselement von einem Rohrbogen (5) gebildet wird, der einen eine Verlängerung des Bügels (1) formenden ersten Schenkel (6) und einen in Richtung des Laufnetzes nach außen verlaufenden zweiten Schenkel (7) aufweist.

3. Gleitschutzkette nach Anspruch 2, dadurch gekennzeichnet, daß der nach außen verlaufende zweite Schenkel (7) des Rohrbogens (5) länger als der erste Schenkel (6) ist.

4. Gleitschutzkette nach einem der Ansprüche 1 bis 3, dadurch gekennzeichnet, daß mindestens ein Teil der Wandung des Führungselementes von einer Schraubenfeder (38) gebildet wird.

5. Gleitschutzkette nach einem der Ansprüche 1 bis 3, dadurch gekennzeichnet, daß mindestens ein Teil der Wandung des Führungselementes von nebeneinander angeordneten geschlossenen Durchziehgliedern gebildet wird.

6. Gleitschutzkette nach einem der Ansprüche 1 bis 3, dadurch gekennzeichnet, daß mindestens ein Teil der Wandung (37) des Führungselementes aus elastischem Material besteht.

7. Gleitschutzkette nach Anspruch 2, dadurch gekennzeichnet, daß die Länge (L) des zweiten Schenkels (7) des Rohrbogens (5) mindestens gleich der zweifachen Teilung (t) der Glieder der Spannkette (4) ist.

8. Gleitschutzkette nach Anspruch 2 oder 7, dadurch gekennzeichnet, daß am dem Rohrbogen (5) gegenüberliegenden Ende des Bügels (1) eine elastische Versteifungshülse (8) für einen Teil des den Abstand zwischen den Enden des Bügels (1) überbrückenden Teil der Spannkette (4) angeordnet ist.

9. Gleitschutzkette nach Anspruch 8, dadurch gekennzeichnet, daß die Versteifungshülse (8) leicht in Richtung zur Mitte des Bügels (1) abgewinkelt ist.

10. Gleitschutzkette nach einem der Ansprüche 1 bis 9, dadurch gekennzeichnet, daß der Bügel (1) mit Anschlußösen (9) für quer zur Laufrichtung verlaufende Kettenstrangstücke (10, 11) versehen ist, die im Laufnetzbereich mit anderen Kettenstrangstücken in Verbindung stehen.

11. Gleitschutzkette nach Anspruch 10, dadurch gekennzeichnet, daß die Anschlußösen (9) drehbar auf dem Bügel (1) gelagert sind.

12. Gleitschutzkette nach Anspruch 10 oder 11, dadurch gekennzeichnet, daß die anderen Kettenstrangstücke Spurstücke (12) bilden.

13. Gleitschutzkette nach einem der Ansprüche 1 bis 12, dadurch gekennzeichnet, daß ein Teil der Spannkette (4) von in ein homogenes Laufnetz einbezogenen Kettenstrangstücken (13, 14) gebildet wird.

14. Gleitschutzkette nach einem der Ansprüche 1 bis 13, dadurch gekennzeichnet, daß die Spannkette (4) im Bereich des Laufnetzes eine am Ende eines Spurstückes (12) befestigte Gleithülse (18) passiert, deren Länge ($L_G$) größer ist als die Differenz aus der Teilung (t) der Glieder (21) der Spannkette und dem Glieddrahtdurchmesser d dieser Glieder.

15. Gleitschutzkette nach Anspruch 14, dadurch gekennzeichnet, daß die Länge (L) der Gleithülse (18) größer ist als die Teilung (t) der Glieder (21) der Spannkette (4).

16. Gleitschutzkette nach Anspruch 15, dadurch gekennzeichnet, daß die Länge (L) der Gleithülse (18) im wesentlichen gleich der Summe aus der Teilung (t) der Glieder (21) der Spannkette (4) und dem doppelten Glieddrahtdurchmesser (d) dieser Glieder ist.

17. Gleitschutzkette nach einem der Ansprüche 14 bis 16, dadurch gekennzeichnet, daß die Gleithülse (18) einen im wesentlichen quadratischen Führugskanal (22) aufweist, dessen Diagonalen (D) nur wenig größer als die äußere Breite ($b_a$) der Kettenglieder (21) der Spannkette (4) sind.

18. Gleitschutzkette nach Anspruch 17, dadurch gekennzeichnet, daß die Gleithülse (18) an den Einlaufecken ihres Führungskanals (22) mit schrägen Führungsrillen (23) versehen ist.

19. Gleitschutzkette nach Anspruch 18, dadurch gekennzeichnet, daß der Abstand (a) der inneren Endpunkte (24) der Führungsrillen (23) mindestens gleich der Differenz aus der Teilung (t) der Glieder (21) der Spannkette (4) und dem doppelten Glieddrahtdurchmesser (d) dieser Glieder (21) ist.

20. Gleitschutzkette nach einem der Ansprüche 17 bis 19, dadurch gekennzeichnet, daß der Führungskanal (22) zwei im wesentlichen parallel zur Reifenlauffläche verlaufende Innenwände (25, 26) aufweist.

21. Gleitschutzkette nach einem der Ansprüche 17 bis 20, dadurch gekennzeichnet, daß der Führungskanal (22) zwei im wesentlichen parallel zur Reifenlauffläche verlaufende Außenwände (27, 28) aufweist.

22. Gleitschutzkette nach Anspruch 21, dadurch gekennzeichnet, daß der Abstand (h) der parallel zur Reifenlauffläche verlaufenden Außenwände (27, 28) des Führungskanals (22) höchstens gleich der Summe aus der äußeren Breite ($b_a$) der Glieder (21) der Spannkette (4) und dem doppelten Glieddrahtdurchmesser (d) dieser Glieder (21) ist.

23. Gleitschutzkette nach Anspruch 17, dadurch gekennzeichnet, daß der Führungskanal (22) abgerundete Ecken (31) aufweist.

24. Gleitschutzkette nach einem der Ansprüche 14 bis 16, dadurch gekennzeichnet, daß die Gleithülse (35) einen im wesentlichen kreuzförmigen Führungskanal (36) aufweist, dessen Achsen unter einem Winkel von etwa 45° zur Lauffläche angeordnet sind.

25. Gleitschutzkette nach einem der Ansprüche 14 bis 24, dadurch gekennzeichnet, daß die Gleithülse (18, 32, 35) mit einer Öse (34) versehen ist, in die das Endglied eines Spurstückes (12) eingehängt ist.

26. Gleitschutzkette nach einem der Ansprüche 14 bis 20, dadurch gekennzeichnet, daß das Führungselement nach Art einer Gleithülse (18) ausgebildet ist.

27. Gleitschutzkette nach einem der Ansprüche 1 bis 26, dadurch gekennzeichnet, daß der Bügel (1) sich in seiner Ruhestellung über 70 bis 90 % des Umfangs eines Kreises mit dem Krümmungsradius des Bügels (1) erstreckt.

28. Gleitschutzkette nach einem der Ansprüche 13 bis 27, dadurch gekennzeichnet, daß die Spannkette (4) im mittleren Teil der Lauffläche um einen Winkelbetrag von 30 bis 90° abgelenkt wird.

29. Gleitschutzkette nach einem der Ansprüche 1 bis 28, dadurch gekennzeichnet, daß die äußere Halterung (16, 39) endlos ausgebildet ist.

30. Gleitschutzkette nach einem der Ansprüche 1 bis 29, dadurch gekennzeichnet, daß der aus Federstahl bestehende elastische Bügel (1) mit als Abstandshalter für Kettenstrangstücke (11) dienenden Kunststoffschlauchabschnitten (40, 41) ummantelt ist.

31. Gleitschutzkette nach einem der Ansprüche 13 bis 30, dadurch gekennzeichnet, daß der die Enden des Bügels (1) miteinander verbindende Teil der Spannkette (4) die Grundlinie eines Trapezes bildet, dessen übrige Seiten von einem Spurstück (12) und zwei von diesen schräg zu den Enden des Bügels (1) verlaufenden Kettenstrangabschnitten gebildet werden.

**Claims**

1. Anti-skid chain for vehicle tyres with holding means, coming into abutment against the inside and the outside of the tyre when the chain is assembled, for chain strand sections (10, 11) extending across the tread surface, wherein a tensioning chain attached to one end of the interior holding means formed by a resilient yoke and passed through a guide element at its other end and then across the tread surface of the tyre to a guide element (15) on the external holding means serves to tension the yoke (1) which can be passed over the tyre, characterised in that the guide element arranged on the yoke (1) braces the tensioning chain (4) upon a length which is at least equal to twice the pitch (t) of the links of the tensioning chain (4).

2. Anti-skid chain according to Claim 1, characterised in that the guide element is formed by a pipe bend (5) which exhibits a first member (6) forming a prolongation of the yoke (1) and a second member (7) oriented outwards towards the tread network.

3. Anti-skid chain according to Claim 2, characterised in that the second member (7) of the pipe bend (5) extending outwards is longer than the first member (6).

4. Anti-skid chain according to any of Claims 1 to 3, characterised in that at least one part of the wall of the guide element is formed by a helicoidal spring (38).

5. Anti-skid chain according to any of Claims 1 to 3, characterised in that at least one part of the wall of the guide element is formed by closed pull-through members arranged juxtaposed.

6. Anti-skid chain according to any of Claims 1 to 3, characterised in that at least one part of the wall (37) of the guide element consists of resilient material.

7. Anti-skid chain according to Claim 2, characterised in that the length (L) of the second member (7) of the pipe bend (5) is at least equals to twice the pitch (t) of the links of the tensioning chain (4).

8. Anti-skid chain according to Claim 2 or 7, characterised in that a resilient stiffening sleeve (8) for a part of that part of the tensioning chain (4) bridging the interval between the ends of the yoke (1) is arranged at the end of the yoke (1) opposite the pipe bend (5).

9. Anti-skid chain according to Claim 8, characterised in that the stiffening sleeve (8) is angled slightly towards the centre of the yoke (1).

10. Anti-skid chain according to any of Claims 1 to 9, characterised in that the yoke (1) is provided with connecting eyes (9) for chain strand pieces (10, 11) oriented transversely to the direction of travel, which are associated with other chain strand sections in the tread network region.

11. Anti-skid chain according to Claim 10, characterised in that the connecting eyes (9) are mounted rotatably on the yoke (1).

12. Anti-skid chain according to Claim 10 or 11, characterised in that the other chain strand pieces form track pieces (12).

13. Anti-skid chain according to any of Claims 1 to 12, characterised in that a part of the tensioning chain (4) is formed by chain strand pieces (13, 14) included in a homogeneous tread network.

14. Anti-skid chain according to any of Claims 1 to 13, characterised in that the tensioning chain (4) passes in the region of the tread network through a sliding sleeve (18) attached to the end of a track piece (12), the length ($L_G$) of which is greater than the difference between the pitch (t) of the links (21) of the tensioning chain and the link wire diameter (d) of these links.

15. Anti-skid chain according to Claim 14, characterised in that the length (L) of the sliding sleeve (18) is greater than the pitch (t) of the links (21) of the tensioning chain (4).

16. Anti-skid chain according to Claim 15, characterised in that the length (L) of the sliding sleeve (18) is substantially equal to the sum of the pitch (t) of the links (21) of the tensioning chain (4) and twice the link wire diameter (d) of these links.

17. Anti-skid chain according to any of Claims 14 to 16, characterised in that the sliding sleeve (18) exhibits a substantially square guide channel (22), the diagonal (D) of which is only slightly greater than the exterior width ($b_a$) of the chain links (21) of the tensioning chain (4).

18. Anti-skid chain according to Claim 17, characterised in that the sliding sleeve (18) is provided with oblique guide grooves (23) at the entry corners of its guide channel (22).

19. Anti-skid chain according to Claim 18, characterised in that the distance (a) of the interior end points (24) of the guide grooves (23) is at least equal to the difference between the pitch (t) of the links (21) of the tensioning chain (4) and twice the link wire diameter (d) of these links (21).

20. Anti-skid chain according to any of Claims 17 to 19, characterised in that the guide channel (22) exhibits two interior walls (25, 26) oriented substantially parallel to the tyre tread surface.

21. Anti-skid chain according to any of Claims 17 to 20, characterised in that the guide channel (22) exhibits two exterior walls (27, 28) oriented substantially parallel to the tyre tread surface.

22. Anti-skid chain according to Claim 21, characterised in that the distance (h) of the exterior walls (27, 28) of the guide channel (22) oriented parallel to the tyre tread surface is at most equal to the sum of the exterior width ($b_a$) of the links (21) of the tensioning chain (4) and twice the link wire diameter (d) of these links (21).

23. Anti-skid chain according to Claim 17, characterised in that the guide channel (22) exhibits rounded corners (31).

24. Anti-skid chain according to any of Claims 14 to 16, characterised in that the sliding sleeve (35) exhibits a substantially cruciform guide channel (36), the axes of which are arranged at an angle of approximately 45° to the tread surface.

25. Anti-skid chain according to any of Claims 14 to 24, characterised in that the sliding sleeve (18, 32, 35) is provided with an eye (34) into which the end link of a track piece (12) is hooked.

26. Anti-skid chain according to any of Claims 14 to 20, characterised in that the guide element is constructed after the fashion of a sliding sleeve (18).

27. Anti-skid chain according to any of Claims 1 to 26, characterised in that the yoke (1) in its rest position extends over 70 to 90 % of the circumference of a circle with the radius of curvature of the yoke (1).

28. Anti-skid chain according to any of Claims 13 to 27, characterised in that the tensioning chain (4) is deviated by an angular amount of 30 to 90° in the central part of the tread surface.

29. Anti-skid chain according to any of Claims 1 to 28, characterised in that the exterior support (16, 39) is of continuous construction.

30. Anti-skid chain according to any of Claims 1 to 29, characterised in that the resilient yoke (1) consisting of spring steel is sheathed with plastic hose sections (40, 41) serving as spacers for chain strand pieces (11).

31. Anti-skid chain according to any of Claims 13 to 30, characterised in that the part of the tensioning chain (4) which connects the ends of the yoke (1) together forms the base of a trapezium, the remaining sides of which are formed by a track piece (12) and two chain strand sections oriented from the latter obliquely to the ends of the yoke (1).

**Revendications**

1. Chaîne antidérapante pour pneumatiques de véhicule, comprenant, pour chaque face, interne ou externe du pneumatique, une fixation pour des tronçons de brin de chaîne (10, 11) s'étendant par-dessus la bande de roulement, cette fixation venant, pour la chaîne à l'état monté, en appui contre cette face interne ou cette face externe du pneumatique, dans laquelle sert pour tendre la fixation interne constituée par un arceau élastique (1) qu'on peut enfoncer sur le pneumatique, une chaîne de serrage (4) fixée à une extrémité de l'arceau et guidée à travers un élément de guidage à son autre extrémité et se raccordant, par-dessus la bande de roulement du pneumatique, à un élément de guidage (15) sur la fixation externe, caractérisée en ce que l'élément de guidage disposé sur l'arceau (1) soutient la chaîne de serrage (4) sur une longueur qui est au moins égale au double du pas (t) des maillons de la chaîne de serrage (4).

2. Chaîne antidérapante selon la revendication 1, caractérisée en ce que l'élément de guidage est constitué par un coude tubulaire (5) qui comporte une première aile (6) formant un prolongement de l'arceau (1) et une seconde aile (7) s'étendant vers l'extérieur en direction du réseau de roulement.

3. Chaîne antidérapante selon la revendication 2, caractérisée en ce que la seconde aile (7), s'étendant vers l'extérieur, du coude tubulaire (5) est plus longue que la première aile (6).

4. Chaîne antidérapante selon l'une des revendications 1 à 3, caractérisée en ce qu'au moins une partie de la paroi de l'élément de guidage est formée par un ressort à boudin (38).

5. Chaîne antidérapante selon l'une des revendications 1 à 3, caractérisée en ce qu'au moins une partie de la paroi de l'élément de guidage est formée d'organes de traversée fermés et disposés côte à côte.

6. Chaîne antidérapante selon l'une des revendications 1 à 3, caractérisée en ce qu'au moins une partie de la paroi (37) de l'élément de guidage est composée d'un matériau élastique.

7. Chaîne antidérapante selon la revendication 2, caractérisée en ce que la longueur (L) de la seconde aile (7) du coude tubulaire (5) est au moins égale au double du pas (t) des maillons de la chaîne de serrage (4).

8. Chaîne antidérapante selon l'une des revendications 2 et 7, caractérisée en ce que, sur l'extrémité de l'arceau (1) opposée au coude tubulaire (5), est monté un fourreau de raidissement, élastique (8) pour une portion de la partie de la chaîne de serrage (4) qui franchit la distance entre les extrémités de l'arceau (1).

9. Chaîne antidérapante selon la revendication 8, caractérisée en ce que le fourreau de raidissement (8) est légèrement incliné en direction du centre de l'arceau (1).

10. Chaîne antidérapante selon l'une des revendications 1 à 9, caractérisée en ce que l'arceau (1) est muni d'œillets de raccordement (9) pour des tronçons de brin de chaîne (10, 11) s'étendant transversalement à la direction de roulement, qui, dans la zone du réseau de roulement, sont en liaison avec d'autres tronçons de brin de chaîne.

11. Chaîne antidérapante selon la revendication 10, caractérisée en ce que les œillets de raccordement (9) sont montés rotatifs sur l'arceau (1).

12. Chaîne antidérapante selon l'une des revendications 10 et 11, caractérisée en ce que les autres tronçons de brin de chaîne forment des tronçons de piste (12).

13. Chaîne antidérapante selon l'une des revendications 1 à 12, caractérisée en ce qu'une partie de la chaîne de serrage (4) est constituée par des tronçons de brin de chaîne (13, 14) intégrés dans un réseau de roulement homogène.

14. Chaîne antidérapante selon l'une des revendications 1 à 13, caractérisée en ce que la chaîne de serrage (4) traverse, dans la région du réseau de roulement, une douille de glissement (18) fixée à l'extrémité d'un tronçon de piste (12), dont la longueur ($L_G$) est plus grande que la différence entre le pas (t) des maillons (21) de la chaîne de serrage et le diamètre du fil de maillon (d) de ces maillons.

15. Chaîne antidérapante selon la revendication 14, caractérisée en ce que la longueur (L) de la douille de glissement (18) est plus grande que le pas (t) des maillons (21) de la chaîne de serrage (4).

16. Chaîne antidérapante selon la revendication 15, caractérisée en ce que la longueur (L) de la douille de glissement (18) est pratiquement égale à la somme du pas (t) des maillons (21) de la chaîne de serrage (4) et du double du diamètre de fil de maillon (d) de ces maillons.

17. Chaîne antidérapante selon l'une des revendications 14 à 16, caractérisée en ce que la douille de glissement (18) comporte un canal de guidage sensiblement rectangulaire (22) dont les diagonales (D) ne sont supérieures que de peu à la largeur extérieure (b_a) des maillons de chaîne (21) de la chaîne de serrage (4).

18. Chaîne antidérapante selon la revendication 17, caractérisée en ce que la douille de glissement (18) est munie, sur les arêtes d'entrée de son canal de guidage (22), de gorges de guidage inclinées (23).

19. Chaîne antidérapante selon la revendication 18, caractérisée en ce que la distance (a) entre les points intérieurs extrêmes (24) des gorges de guidage (23) est au moins égale à la différence entre le pas (t) des maillons (21) de la chaîne de serrage (14) et le double du diamètre de fil de maillon (d) de ces maillons (21).

20. Chaîne antidérapante selon l'une des revendications 17 à 19, caractérisée en ce que le canal de guidage (22) comporte deux parois internes (25, 26) s'étendant pratiquement parallèlement à la bande de roulement du pneumatique.

21. Chaîne antidérapante selon l'une des revendications 17 à 20, caractérisée en ce que le canal de guidage (22) comporte deux parois externes (27, 28) s'étendant pratiquement parallèlement à la bande de roulement du pneumatique.

22. Chaîne antidérapante selon la revendication 21, caractérisée en ce que la distance (h) entre les parois externes (27, 28) du canal de guidage (22) qui sont parallèles à la bande de roulement du penumatique est au plus égale à la somme de la largeur extérieure (b_a) des maillons (21) de la chaîne de serrage (4) et du double du diamètre de fil de maillon (d) de ces maillons (21).

23. Chaîne antidérapante selon la revendication 17, caractérisée en ce que le canal de guidage (22) comporte des arêtes arrondies (31).

24. Chaîne antidérapante selon l'une des revendications 14 à 16, caractérisée en ce que la douille de glissement (35) comporte un canal de guidage sensiblement en forme de croix (36) dont les axes font un angle d'environ 45° par rapport à la bande de roulement.

25. Chaîne antidérapante selon l'une des revendications 14 à 24, caractérisée en ce que la douille de glissement (18, 32, 35) est munie d'un œillet (34) dans lequel est accroché le maillon extrême d'un tronçon de piste (12).

26. Chaîne antidérapante selon l'une des revendications 14 à 20, caractérisée en ce que l'élément de guidage est agencé à la façon d'une douille de glissement (18).

27. Chaîne antidérapante selon l'une des revendications 1 à 26, caractérisée en ce que l'arceau (1) s'étend, dans sa position de repos, sur 70 à 90 % du périmètre d'un cercle ayant le rayon de courbure de l'arceau (1).

28. Chaîne antidérapante selon l'une des revendications 13 à 27, caractérisée en ce que la chaîne de serrage (4) est déviée, dans la partie médiane de la bande de roulement, d'une valeur d'angle de 30 à 90°.

29. Chaîne antidérapante selon l'une des revendications 1 à 28, caractérisées en ce que la fixation externe (16, 39) est réalisée sans fin.

30. Chaîne antidérapante selon l'une des revendications 1 à 29, caractérisée en ce que l'arceau élastique (1) réalisé en acier à ressort est enveloppé de tronçons de tuyau de matière plastique (40, 41) servant d'écarteurs pour des tronçons de brin de chaîne (11).

31. Chaîne antidérapante selon l'une des revendications 13 à 30, caractérisée en ce que la partie de la chaîne de serrage (4) qui relie entre elles les extrémités de l'arceau (1) constitue la ligne de base d'un trapèze dont les autres côtés sont formés par un tronçon de piste (12) et deux tronçons de brin de chaîne partant de celui-ci de façon inclinée vers les extrémités de l'arceau (1).

Fig. 1

Fig. 2

Fig. 3

0 048 686

Fig. 4

Fig. 5

3

Fig. 6

Fig. 7

Fig. 8

Fig. 9

Fig. 10

0 048 686

Fig. 11

Fig. 12

5

Fig. 13